# EUROPÄISCHE PATENTANMELDUNG

(11) **EP 1 990 530 A2**
(43) Veröffentlichungstag der Anmeldung: **12.11.2008**
(21) Anmeldenummer: 08007592.2
(22) Anmeldetag: 18.04.2008
(51) Int. Cl.: F02M 35/024

(54) **Luftansaugvorrichtung**

(30) Priorität: 09.05.2007 DE 102007021756
(71) Anmelder: KTM Sportmotorcycle AG, 5230 Mattighofen (AT)
(72) Erfinder: Matschl, Gerald, 5230 Mattighofen (AT); Gustafson, Torbjörn, 5165 Berndorf (AT)
(74) Vertreter: Söllner, Udo

(57) **Zusammenfassung**

Es wird eine Luftansaugvorrichtung für ein mit einer Brennkraftmaschine ausgestattetes Fahrzeug vorgeschlagen, mit einer gereinigte Ansaugluft für die Verbrennung in Richtung zur Brennkraftmaschine führenden Einrichtung (4) und einem an der Einrichtung (4) angeordneten Luftfilterelement (8) sowie einem das Luftfilterelement (8) aufnehmenden Gehäuse (10), wobei die Einrichtung (4) derart ausgebildet ist, dass das Luftfilterelement (1) aus dem Gehäuse (10) heraus verschwenkbar ist und dabei an der Einrichtung (4) angeordnet verbleibt.

## Beschreibung

Die vorliegende Erfindung betrifft eine Luftansaugvorrichtung für ein mit einer Brennkraftmaschine ausgestattetes Fahrzeug, mit einer gereinigte Ansaugluft für die Verbrennung in Richtung zur Brennkraftmaschine führenden Einrichtung und einem an der Einrichtung angeordneten Luftfilterelement sowie einem das Luftfilterelement aufnehmenden Gehäuse nach dem Oberbegriff des Anspruchs 1.

Bei einem mit einer Brennkraftmaschine ausgestatteten Fahrzeug ist üblicherweise eine Luftansaugvorrichtung vorgesehen, über die der Brennkraftmaschine Luft für die Verbrennung zugeführt wird. Gleichzeitig weist die Luftansaugvorrichtung ein Luftfilterelement auf, welches der Reinigung der Ansaugluft dient, um aus der Ansaugluft beim Durchtritt durch das Luftfilterelement Verunreinigungen in der Form von Staub, Wasser, Sand und dergleichen zu entfernen, die von dem Luftfilterelement aufgenommen werden und dort einen Filterkuchen aufbauen können.

Eine solche effiziente Ansaugluftreinigung ist insbesondere bei Fahrzeugen erforderlich, die auch in unbefestigtem Gelände bewegt werden, wie beispielsweise Geländesportmotorräder oder auch sogenannte All-Terrain-Vehicle, kurz auch ATV genannt. Bei einem solchen Fahrzeug ist es zur Aufrechterhaltung der Leistung der Brennkraftmaschine erforderlich, das Luftfilterelement häufig zu reinigen, um die aufgenommenen Partikel wieder zu entfernen, damit der Druckverlust beim Durchtritt der Ansaugluft durch das Luftfilterelement nicht wesentlich ansteigt.

Bekannte, bei einem ATV eingesetzte Luftansaugvorrichtungen weisen ein Luftfilterelement auf, welches in einem Gehäuse angeordnet ist und dabei unterhalb des Fahrersattels des ATV angeordnet ist, wobei das Luftfilterelement die Form eines langgestreckten Zylinders besitzt und dabei über einen an der Stirnseite des Zylinders angeordneten Stutzen an einem komplementär ausgebildeten Stutzen des Gehäuses festgelegt wird und zwar über eine Schelle, mit der der Stutzen des bekannten Luftfilterelements gegen den Stutzen des Gehäuses verschraubt wird. Um nun das bekannte Luftfilterelement reinigen zu können, muss zunächst ein Deckel des Gehäuses entfernt werden und hierzu müssen mittels eines Werkzeuges den Deckel am Gehäuse fixierende Schrauben gelöst werden oder Klemmverbindungen zwischen dem Deckel und dem Gehäuse gelöst werden. Sodann muss mittels eines Werkzeuges eine Verschraubung der Schelle geöffnet werden, damit letztlich das Luftfilterelement von dem Stutzen im Gehäuse abgezogen werden kann, um dann durch die vormals vom Deckel verschlossene Öffnung aus dem Gehäuse entnommen werden zu können.

Eine weitere bekannte Luftansaugvorrichtung weist einen zylinderförmigen Schaumstoffkörper auf, der an einem Trägerkörper angeordnet ist und in einem das Luftfilterelement aufnehmenden Gehäuse ebenfalls mittels einer Schraube festgelegt wird, die sich entlang der Längsachse des zylinderförmigen Luftfilterelements erstreckt und im Bereich eines Gehäusestutzens, an dem das Luftfilterelement über einen entsprechend ausgebildeten Stutzen aufgeschoben werden kann, dann mittels eines Werkzeugs verschraubt wird.

Um nun bei dieser bekannten Luftansaugvorrichtung das Luftfilterelement entnehmen zu können, muss unter Zuhilfenahme eines Werkzeugs zunächst die Verschraubung gelöst werden, damit anschließend das Luftfilterelement aus dem Gehäuse entnommen werden kann. Nach einer entsprechenden Reinigung des Luftfilterelements muss dieses in umgekehrter Reihenfolge wieder zunächst in das Gehäuse eingesetzt werden, um dann mittels eines Werkzeugs die Verschraubung zwischen dem Luftfilterelement und dem Gehäusestutzen wieder festzuziehen.

Die die jeweiligen Luftfilterelemente aufnehmenden Gehäuse sind unterhalb des Fahrersattels angeordnet und zwischen dem Gehäuse und den Hinterrädern der genannten ATV abdeckenden Kotflügeln ist jeweils ein Spalt vorgesehen, was dazu führt, dass von den Hinterrädern aufgewirbelter Staub, Sand und/oder Steine durch den Spalt in das Gehäuse gelangen können, um dort für eine rasche Verschmutzung des Luftfilterelements zu sorgen.

Das Reinigen der Luftfilterelemente bei den genannten bekannten Luftansaugvorrichtungen ist ohne die Zuhilfenahme von Werkzeug nicht möglich und darüber hinaus auch zeitaufwendig, da jeweils in einem ersten Schritt Verschraubungen geöffnet werden müssen, um dann in einem nächsten Schritt das Luftfilterelement aus dem aufnehmenden Gehäuse herausnehmen zu können. Nach der Reinigung des Luftfilterelements muss dieses in umgekehrter Reihenfolge wieder zunächst in das Gehäuse eingesetzt werden und anschließend die Verschraubung wieder festgezogen werden.

Ausgehend hiervon liegt der vorliegenden Erfindung nunmehr zur Beseitigung der geschilderten Nachteile die Aufgabe zugrunde, eine Luftansaugvorrichtung für ein mit einer Brennkraftmaschine ausgestattetes Fahrzeug zu schaffen, bei der es ohne Zuhilfenahme von Werkzeug möglich ist, das Luftfilterelement aus dem aufnehmenden Gehäuse entnehmen zu können, um ein rasches Reinigen des Luftfilterelements zu ermöglichen.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft nun eine Luftansaugvorrichtung für ein mit einer Brennkraftmaschine ausgestattetes Fahrzeug, mit einer gereinigte Ansaugluft für die Verbrennung in Richtung zur Brennkraftmaschine führenden Einrichtung und einem an der Einrichtung angeordneten Luftfilterelement sowie einem das Luftfilterelement aufnehmenden Gehäuse, wobei die Einrichtung derart ausgebildet ist, dass das Luftfilterelement aus dem Gehäuse heraus verschwenkbar ist und dabei an der Einrichtung angeordnet verbleibt.

Die erfindungsgemäße Luftansaugvorrichtung zeichnet sich also dadurch aus, dass ohne die Zuhilfenahme von Werkzeug das Luftfilterelement aus dem Gehäuse heraus bewegt werden kann und dabei eine durch die Einrichtung geführte Bewegung ausführt und bei der Schwenkbewegung aus dem Gehäuse heraus an der Einrichtung angeordnet verbleibt. Somit kann zusammen mit einer Schwenkbewegung durch die Einrichtung beziehungsweise einer von der Einrichtung durchgeführten Schwenkbewegung das Luftfilterelement aus dem das Luftfilterelement aufnehmenden Gehäuse herausbewegt werden, ohne dass dazu die Zuhilfenahme von Werkzeug erforderlich ist.

Das so aus dem Gehäuse heraus verschwenkte Luftfilterelement kann dann ebenfalls ohne die Zuhilfenahme von Werkzeug von der Einrichtung getrennt werden, also von der Einrichtung abgenommen werden, um beispielsweise gereinigt zu werden. Danach wird das Luftfilterelement wieder an der Einrichtung lösbar festgelegt und durch eine Verschwenkbewegung der Einrichtung wieder in das Gehäuse zurückbewegt.

Zu diesem Zweck ist es nach einer Weiterbildung der Erfindung vorgesehen, dass die Einrichtung einen Abschnitt besitzt, an dem das Luftfilterelement lösbar festgelegt ist und der Abschnitt an dem Gehäuse festlegbar ist und dabei einen Deckel des Gehäuses bildet.

Ein Abschnitt der Einrichtung kann also so ausgebildet sein, dass das Luftfilterelement daran lösbar festgelegt werden kann und dieser Abschnitt bildet gleichzeitig einen Deckel des Gehäuses aus. Durch die Verschwenkbewegung der Einrichtung wird der Abschnitt vom Gehäuse abgenommen und dabei gleichzeitig das Luftfilterelement aus dem Gehäuse herausgeschwenkt. In ähnlicher Weise wird durch eine Verschwenkbewegung der Einrichtung das Luftfilterelement wieder in das Gehäuse zurückbewegt und der Abschnitt am Gehäuse festgelegt, der dabei gleichzeitig den Deckel des Gehäuses bildet und somit das Gehäuse gegen das Eindringen von Schmutz, Staub, Wasser, Sand und dergleichen schützt.

Nach einer Weiterbildung der Erfindung ist es dabei vorgesehen, dass die Einrichtung einen die Ansaugluft führenden Kanal mit einem im Querschnitt geschlossenen Profil besitzt, der mit einem zum Abschnitt hin offenen gewölbten Element einstückig ausgebildet ist, das an dem Abschnitt festlegbar ist und der Kanal an dem dem Element gegenüberliegenden Endbereich zur Anordnung an einem Drosselklappenkörper oder einem Vergaserkörper der Brennkraftmaschine ausgebildet ist.

Der mit einem im Querschnitt geschlossenen Profil ausgebildete Kanal kann beispielsweise kreisförmig oder im Querschnitt eine Form ähnlich einer Ellipse aufweisen und besitzt an seinem Endbereich, der zu dem vorstehend erwähnten Abschnitt hin ausgerichtet ist, ein zum Durchtritt von Ansaugluft offenes gewölbtes Element, beispielsweise ein ähnlich einer Kuppel ausgebildetes Element, welches einstückig mit dem Kanal ausgebildet ist. Dieses beispielsweise kuppelförmig ausgebildete Element kann nun an dem Abschnitt festgelegt werden, beispielsweise über Rastnasen, die an dem Element ausgebildet werden und in entsprechende Ausnehmungen des Abschnitts, der gleichzeitig den Deckel des Gehäuses bildet, verrastet werden.

Um nun die von dem Luftfilterelement gereinigte Ansaugluft zur Brennkraftmaschine hin zu transportieren wird die Ansaugluft durch den Kanal geleitet, der an seinem dem kuppelförmigen Element gegenüberliegenden Endbereich so ausgebildet ist, dass er an einem Drosselklappenkörper oder einem Vergaserkörper der Brennkraftmaschine festgelegt werden kann.

Um nun die Verschwenkbarkeit der Einrichtung zu erreichen, ist es nach einer Weiterbildung der Erfindung vorgesehen, dass die Einrichtung im Bereich eines die gereinigte Ansaugluft in Richtung zur Brennkraftmaschine führenden Kanals elastisch ausgebildet ist und aus der Ebene eines Deckels des Gehäuses heraus verschwenkbar ist. Es bedeutet dies mit anderen Worten, dass der Kanal beispielsweise aus einem gummielastischen Werkstoff gefertigt sein kann, beispielsweise Nitrilbuthylkautschuk, so dass das am Abschnitt lösbar festgelegte Luftfilterelement aus dem Gehäuse heraus verschwenkt werden kann, indem der Abschnitt zusammen mit dem offenen gewölbten Element und dem Luftfilterelement in Einbaulage am Fahrzeug beispielsweise in Richtung nach oben verschwenkt werden kann und dabei an dem elastisch ausgebildeten Kanal eine Verschwenkbewegung durchgeführt wird, so dass das Luftfilterelement bezogen auf seine Einbaulage im Gehäuse um einen Winkel von beispielsweise 60 bis 120 Grad herausverschwenkt werden kann, um frei und offen zugänglich zu sein.

In dieser Lage kann das Luftfilterelement ohne Zuhilfenahme von Werkzeug vom Abschnitt gelöst werden, um beispielsweise gereinigt zu werden. Nach der Reinigung kann das Luftfilterelement an dem Abschnitt wieder lösbar festgelegt werden und in das Gehäuse zurückverschwenkt werden, indem an dem elastisch ausgebildeten Kanal eine Verschwenkbewegung in die entgegengesetzte Richtung durchgeführt wird, so dass das Luftfilterelement zusammen mit dem Abschnitt und dem gewölbten Element wieder in die Ausgangslage zurückbewegt wird. Auf diese Weise ist ein ausgesprochen rasches Abnehmen des Luftfilterelements möglich, ohne dass dazu - wie dies bei den bekannten Luftansaugvorrichtungen der Fall ist - der Benutzer ein Werkzeug benutzen müsste.

Um nun ein Pulsieren des elastischen Kanals aufgrund der darin strömenden pulsierenden Luftsäule zu vermeiden, ist es nach einer Weiterbildung der Erfindung vorgesehen, dass der Kanal innerhalb seines geschlossenen Profils mit mindestens einer längsverlaufenden Versteifungsrippe versehen ist, die sich beispielsweise von weitgehend einem Endbereich bis zu weitgehend dem gegenüberliegenden Endbereich des Kanals erstrecken kann. Über die Zahl der vorgesehenen Versteifungsrippen kann die Steifigkeit des Kanals beeinflusst werden. So können beispielsweise entlang des Innenumfangs des Kanals vier längsverlaufende Versteifungsrippen vorgesehen sein, so dass der Kanal trotz seiner elastischen Ausbildung nicht zum Pulsieren aufgrund der pulsierenden Gasströmung neigt.

Nach einer Weiterbildung der Erfindung ist es zur Vergrößerung der von der Ansaugluft durchsetzbaren Fläche des Luftfilterelements vorgesehen, dass das Luftfilterelement ein kuppelförmig ausgebildetes Schaumstoffelement ist mit einem Dichtrand und an einem mit einem Durchlass versehenen Haltekörper angeordnet ist und mittels eines Federbügels mit dem Dichtrand gegen einen Abschnitt der Einrichtung in Anlage bringbar ist. Durch die kuppelförmige Ausbildung wird eine Vergrößerung der von der Ansaugluft durchsetzbaren Filterelementsfläche erreicht und das Filterelement kann aus einem Schaumstoffelement zur Bildung eines Nassluftfilters ausgebildet sein. Das Schaumstoffelement kann an einem komplementär ausgebildeten Haltekörper angeordnet werden, der einen Durchlass für die Ansaugluft besitzt und das so aufgespannte Luftfilterelement kann mittels eines Federbügels mit dem Dichtrand gegen einen Abschnitt der Einrichtung, der beispielsweise der vorstehend erwähnte Deckel des Gehäuses sein kann, in Anlage gebracht werden.

Der Federbügel sorgt dafür, dass das Luftfilterelement mit seinem Dichtrand gegen den Deckel gedrückt wird und somit einen Eintritt von verunreinigter Luft in den Ansaugluftkanal vermeidet. Soll das Luftfilterelement gereinigt werden, so ist es nur erforderlich, den Federbügel zu lösen und das Luftfilterelement kann abgenommen werden. Zur Montage des Luftfilterelements an dem Abschnitt beziehungsweise Deckel wird es mit seinem Dichtrand gegen den Deckel angesetzt und dann über die Federvorspannung des Federbügels fest gegen den Deckel gedrückt.

Um eine Selbstreinigungswirkung des Schaumstoffelements zu erreichen, ist es nach einer Weiterbildung der Erfindung vorgesehen, dass das Schaumstoffelement mit dem Dichtrand so gegen den Abschnitt in Anlage bringbar ist, dass das Schaumstoffelement im Gehäuse herabhängend angeordnet ist. Hierdurch wird erreicht, dass durch die während des Betriebs des mit der Luftansaugvorrichtung ausgestatteten Fahrzeugs auftretenden Erschütterungen dafür sorgen, dass an der Mantelfläche des Schaumstoffelements angesammelte Verunreinigungen im Gehäuse in Richtung nach unten fallen können.

Wie es vorstehend bereits erläutert wurde, befindet sich bei den bekannten Luftansaugvorrichtungen ein Spaltraum zwischen den Kotflügeln des Fahrzeugs und dem das Luftfilterelement aufnehmenden Gehäuse mit dem Nachteil, dass von den Rädern des Fahrzeugs aufgewirbelte Verunreinigungen über den Lufteinlassbereich des Gehäuses in das Gehäuse gelangen können.

Um nun die Beaufschlagung des Luftfilterelements mit von den Rädern des Fahrzeugs aufgewirbelten Verunreinigungen zu verringern, ist es nach einer Weiterbildung der Erfindung vorgesehen, dass das Gehäuse einstückig mit sich in Längsrichtung des Gehäuses davon beidseits seitlich wegerstreckenden Kotflügeln ausgebildet ist, die zur Anordnung oberhalb von Rädern des Fahrzeugs vorgesehen sind. Es bedeutet dies mit anderen Worten, dass die Konfiguration Gehäuse und beidseits sich davon wegerstreckende Kotflügel dafür sorgt, dass zwischen den Kotflügeln und dem Gehäuse kein Spaltraum mehr besteht, über den von den Rädern hochgewirbelte Verunreinigungen direkt in den Bereich der Lufteintrittsöffnungen des Gehäuses gelangen können.

Das Gehäuse für die Aufnahme des Luftfilterelements bildet so mit den Kotflügeln eine einstückige Konfiguration aus, was auch dafür sorgt, dass von den Rädern hochgewirbeltes Wasser nicht mehr in den Bereich der Luftdurchtrittsöffnungen des Gehäuses gelangen kann. Zudem sorgt diese Konfiguration dafür, dass zur Bildung des Gehäuses und der Kotflügel nicht mehrere Bauteile erforderlich sind, die bei der Fertigung des Fahrzeugs auch jeweils einzeln montiert werden müssten und somit die Rüstzeiten bei der Fahrzeugfertigung erhöhen.

Die erfindungsgemäße Ausbildung des Gehäuses sorgt dafür, dass auch keine zusätzlichen Verkleidungsteile erforderlich sind, um beispielsweise ein Eindringen von Verunreinigungen oder Wasser in den Bereich der Lufteintrittsöffnungen in das Gehäuse zu vermeiden. Nach einer Weiterbildung der Erfindung kann es auch vorgesehen sein, dass das Gehäuse mit der vollständigen Luftansaugvorrichtung vollständig vormontiert wird und somit bei der Fertigung des damit ausgestatteten Fahrzeugs nur mehr als so vorgefertigte einstückige Einheit auf eine Rahmenstruktur des Fahrzeugs aufgesetzt und daran festgelegt werden muss.

In Weiterbildung der Erfindung ist es vorgesehen, dass das Gehäuse an einem in Längsrichtung des Gehäuses einem ansaugluftführenden Kanal gegenüberliegenden Endbereich einen Ansaugluftstutzen zur Führung von Umgebungsluft in das Gehäuse besitzt. Um nun den Transport von Verunreinigungen in das Gehäuse zu verringern, ist es nach einer Weiterbildung der Erfindung vorgesehen, dass der Ansaugluftstutzen zur Anordnung im Bereich unterhalb eines Fahrersattels des Fahrzeugs ausgebildet ist. Damit kann über diesen Ansaugluftstutzen zu reinigende Umgebungsluft in das Gehäuse gelangen, durch die Anordnung des Ansaugluftstutzens aber unterhalb des Fahrersattels des Fahrzeugs wird erreicht, dass die den Ansaugluftstutzen passierende Umgebungsluft weniger Verunreinigungen enthält, als dies beispielsweise der Fall wäre, wenn der Ansaugluftstutzen völlig frei und von keinen Abdeckungen geschützt angeordnet wäre.

Nach einer Ausführungsform der Erfindung ist es vorgesehen, dass das Gehäuse Seitenwände aufweist, die einstückig mit einem Gehäuseboden ausgebildet sind, der in einem Schnitt quer zur Längsrichtung des Gehäuses einem invertierten Satteldach ähnlich ausgebildet ist und an einer tiefsten Stelle eine Ablaufbohrung besitzt. Durch diese Konfiguration wird erreicht, dass über die Umgebungsluft in das Gehäuse gelangende Verunreinigungen oder Feuchtigkeit sich an dem Gehäuseboden ablagern können und in Richtung zu der mit einer Ablaufbohrung versehenen tiefsten Stelle des einem invertierten Satteldach ähnlichen Gehäusebodens gelangen können, um über die Ablaufbohrung aus dem Gehäuse ausgebracht zu werden.

Wie es vorstehend bereits erläutert wurde, kann die Luftansaugvorrichtung zusammen mit dem die Fahrzeugkotflügel aufweisenden Gehäuse als Einheit vormontiert werden. Die Luftansaugvorrichtung ist dabei so ausgebildet, dass sie unterhalb eines Fahrersattels des Fahrzeugs angeordnet werden kann, so dass auch der Ansaugluftstutzen unterhalb des Fahrzeugsattels liegt, wobei es sich bei dem Fahrzeug beispielsweise um ein zweispuriges Fahrzeug handeln kann, das für Fahrer und/oder Beifahrer einen Sattel aufweist und mittels einer Lenkstange gelenkt wird. Es kann sich bei dem Fahrzeug um ein so genanntes All-Terrain-Vehicle oder kurz auch ATV handeln.

Die Erfindung wird nun im Folgenden anhand der Zeichnung näher erläutert. Diese zeigt in:
Fig. 1 eine Schnittansicht einer an einer Rahmenstruktur eines ATV angeordneten Luftansaugvorrichtung gemäß einer Ausführungsform nach der vorliegenden Erfindung;
Fig. 2 eine Darstellung ähnlich Fig. 1 mit abgenommenem Fahrersattel und in einer aus einem Gehäuse heraus verschwenkten Stellung;
Fig. 3 eine Darstellung ähnlich Fig. 2 in einer perspektivischen Ansicht;
Fig. 4 eine Querschnittsansicht der in Fig. 1 dargestellten Ausführungsform in einer Ansicht von hinten; und
Fig. 5 eine Explosionsdarstellung einer Luftansaugvorrichtung gemäß der vorliegenden Erfindung.

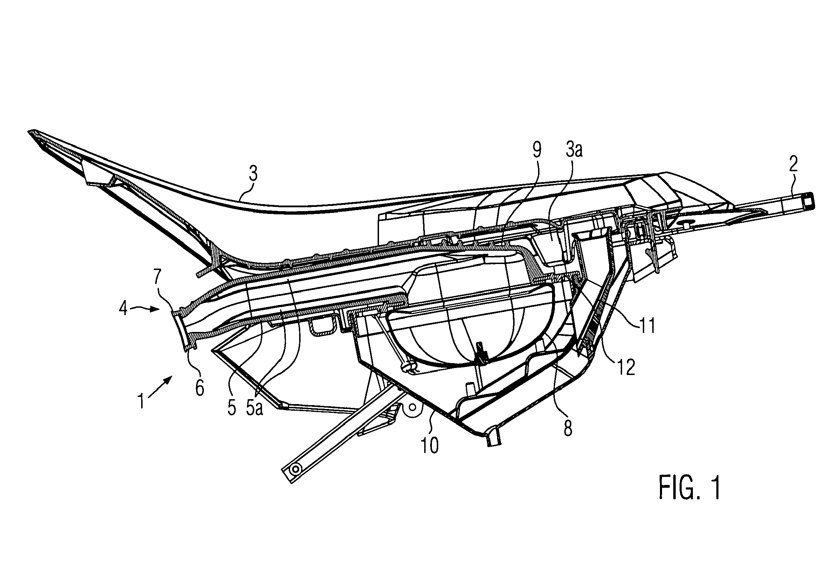

Fig. 1 der Zeichnung zeigt eine Schnittansicht einer Luftansaugvorrichtung 1 gemäß einer Ausführungsform der vorliegenden Erfindung in einer an einer Rahmenstruktur 2 eines ATV angeordnet.

An der Rahmenstruktur 2 befindet sich ein Sattel 3 für einen Fahrer des nicht näher dargestellten ATV angeordnet. Wie es ohne Weiteres ersichtlich ist, ist die Luftansaugvorrichtung 1 bei der dargestellten Ausführungsform unterhalb des Fahrersattels 3 angeordnet, so dass die Luftansaugvorrichtung 1 bereits staub- und spritzwassergeschützt angeordnet ist. Die Luftansaugvorrichtung 1 weist eine Einrichtung 4 zur Führung von gereinigter Ansaugluft für die Verbrennung in Richtung zur nicht näher dargestellten Brennkraftmaschine auf. Diese besitzt einen elastisch ausgebildeten Kanal 5, über den gereinigte Ansaugluft in Richtung zu der nicht näher dargestellten Brennkraftmaschine transportiert werden kann. Zu diesem Zweck ist der Kanal 5 an seinem der Brennkraftmaschine zugewandten Endbereich 6 mit einem Anschlussstutzen 7 ausgebildet, der mit einem Drosselklappenkörper oder einem Vergaserkörper der Brennkraftmaschine verbunden werden kann.

Der Kanal 5 erstreckt sich von dem Anschlussstutzen 7 in Richtung zu einem Luftfilterelement 8 in Fahrzeuglängsrichtung betrachtet in der Zeichnungsebene der Fig. 1 in Richtung nach hinten.

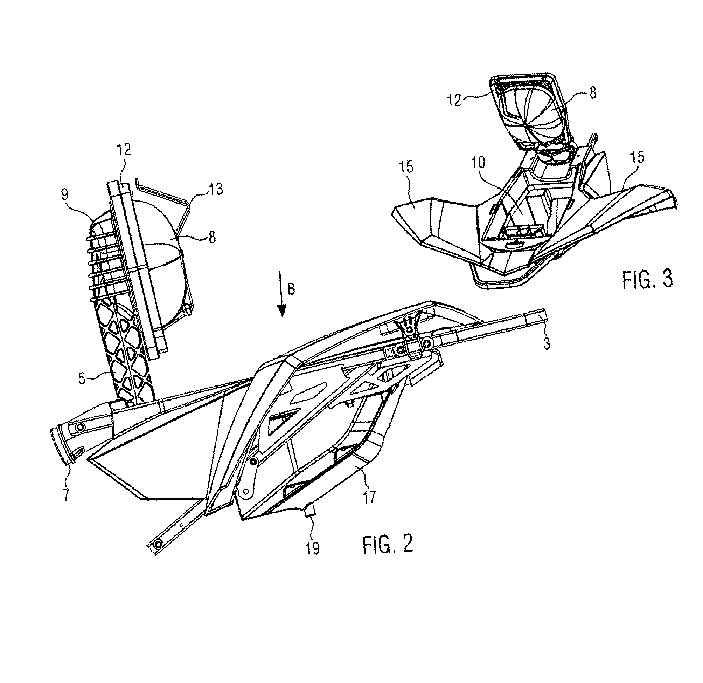

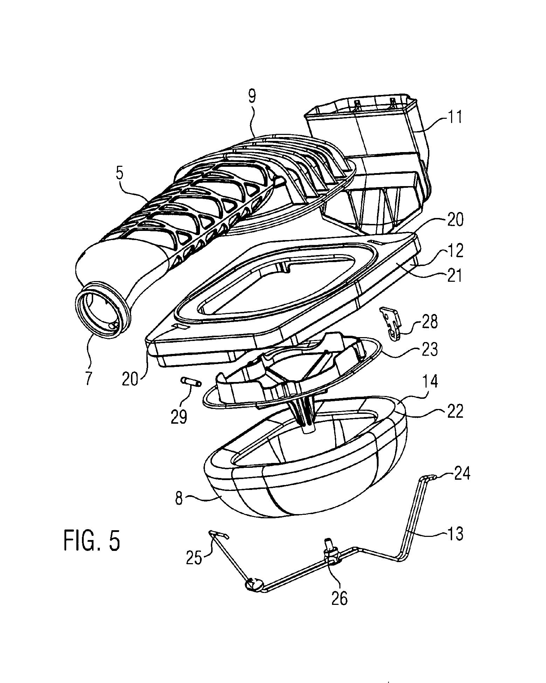

Wie es näher noch anhand von beispielsweise Fig. 5 der Zeichnung ersichtlich ist, ist der Kanal 5 im Querschnitt oval oder ellipsenförmig ausgebildet und besitzt ein in sich geschlossenes Profil. Der Kanal 5 ist dabei einstückig ausgebildet mit einem kuppeldachförmig ausgebildeten offenen gewölbten Element 9 und kann aus einem gummielastischen Werkstoff gefertigt sein, beispielsweise Nitrilbuthylkautschuk. Hierdurch wird eine entsprechende Elastizität oder Flexibilität des Kanals 5 erreicht, so dass das Luftfilterelement 8 aus einem näher anhand von Fig. 3 der Zeichnung ersichtlichen Gehäuse 10 heraus verschwenkt werden kann, um zu Zwecken der Reinigung frei zugänglich zu sein.

Aus der Umgebung stammende Ansaugluft kann über einen unterhalb des Fahrersattels 3 angeordneten Ansaugluftstutzen 11 in das Gehäuse 10 gelangen und von dort über das Luftfilterelement 8 gereinigt in den elastisch ausgebildeten Kanal 5 und von dort über den Anschlussstutzen 7 zur nicht näher dargestellten Brennkraftmaschine strömen. Beim Ansaugen der zur Verbrennung vorgesehenen Ansaugluft entsteht in dem Kanal 5 eine pulsierende Luftströmung. Um ein diese Strömung negativ beeinflussendes Pulsieren des elastischen Kanals 5 zu vermeiden, sind im Kanal 5 entlang des Innenumfangs bei der dargestellten Ausführungsform vier längsverlaufende Versteifungsrippen 5a vorgesehen, die sich von weitgehend dem Endbereich 6 des Kanals 5 bis zu weitgehend dem gegenüberliegenden Endbereich im Bereich des Elements 9 erstrecken.

Das Gehäuse 10 wird bei in dem Gehäuse 10 angeordnetem Luftfilterelement 8 durch einen Abschnitt 12 der Luftansaugvorrichtung 1 verschlossen, der gleichzeitig den Deckel des Gehäuses 10 bildet. Beim Betrieb einer Brennkraftmaschine kann es unter Umständen zu einem als Backfire bekannten Vorgang kommen, bei dem eine in den Brennraum eingeströmte Luftkraftstoffmischung entzündet wird und es zu einer Verpuffung kommt, die sich als Druckwelle in den Ansaugluftbereich fortsetzt. Der Abschnitt 12 wird im Betrieb der Brennkraftmaschine über den im Gehäuse 10 gebildeten Unterdruck auf Seitenwände 16 gedrückt. Um nun dafür zu sorgen, dass sich der Abschnitt 12 bei einem solchen Backfirevorgang nicht in ungewünschter Weise von den Seitenwänden 16 löst, kann zwischen einem Vorsprung 3a am Sattel 3 und dem Abschnitt 12 ein nicht näher dargestelltes elastisches Element in der Form beispielsweise eines Schaumstoffelements angeordnet sein, das bei einem geringfügigen Abheben des Abschnitts 12 vom Gehäuse 10 an dem Vorsprung 3a in Anlage kommt und somit ein weiteres Abheben des Abschnitts 12 vom Gehäuse 10 vermeidet.

Um nun das Luftfilterelement 8 in die in der Fig. 2 und 3 der Zeichnung dargestellte, aus dem Gehäuse 10 heraus verschwenkte Stellung zu bringen, wird der Fahrersattel 3 abgenommen oder beispielsweise an einem im vorderen Endbereich des Fahrersattels angeordneten Gelenk ebenfalls nach oben geschwenkt. Hierdurch wird der Zugang zur Luftansaugvorrichtung 1 freigegeben und das Filterelement 8 kann zusammen mit dem Deckel 12 und dem kuppelförmigen offenen gewölbten Element 9 in Richtung nach oben verschwenkt werden, wobei der elastische Kanal 5 gleichzeitig als Schwenkgelenk dient.

Um das Luftfilterelement 8 in die aus dem Gehäuse 10 heraus verschwenkte nach oben gerichtete Stellung zu bringen, die in Fig. 2 und 3 der Zeichnung dargestellt ist, ist kein Werkzeug erforderlich, so dass die nach oben verschwenkte Stellung schnell herbeigeführt werden kann, sobald der Fahrersattel 3 abgenommen oder ebenfalls in Richtung nach oben verschwenkt worden ist. Dabei aber ist das Luftfilterelement 8 sofort zugänglich, um beispielsweise gereinigt zu werden. Zu diesem Zweck kann das aus einem kuppelförmig ausgebildeten Schaumstoffelement gebildete Luftfilterelement 8 einfach von dem Deckel 12 abgenommen werden, indem ein Federbügel 13 aus seiner mit dem Deckel 12 verrasteten Stellung gelöst wird. Danach kann das Filterelement 8 abgenommen und beispielsweise ausgewaschen oder anderweitig gereinigt werden. In umgekehrter Reihenfolge wird das Luftfilterelement 8 an dem Deckel 12 mit einem näher anhand von Fig. 5 der Zeichnung ersichtlichen Dichtrand 14 bündig aufgesetzt und anschließend der Federbügel 13 an dem Deckel 12 festgelegt. Zu diesem Zweck ist an der Unterseite des Deckels eine Hülse 29 vorgesehen, in die der Federbügel 13 mit einer Endseite 25 drehbar eingreifen kann. Die andere Endseite 24 des Federbügels 13 kann an einem Haken eines ebenfalls an der Unterseite des Deckels 12 festgelegten Halteelements 28 eingehakt werden, so dass das Luftfilterelement 8 gegen den Deckel 12 gedrückt wird.

Danach kann das Luftfilterelement 8 wieder in das Gehäuse 10 zurückverschwenkt werden, indem der Kanal 5, das Element 9, der Deckel 12 und das Luftfilterelement 8 zusammen mit dem Federbügel 13 in der Zeichnungsebene der Fig. 2 in Richtung des Pfeiles B in Richtung nach unten verschwenkt werden. Dabei gelangt das Luftfilterelement 8 wieder in das Gehäuse 10 und der Deckel 12 nimmt mit dem Gehäuse 10 eine das Gehäuse 10 verschließende Stellung ein. Dies ist die in Fig. 1 der Zeichnung dargestellte Stellung. In dieser Stellung ist das Luftfilterelement 8 im Gehäuse 10 herabhängend angeordnet, der Dichtrand 14 befindet sich also in Hochachsrichtung des Luftfilterelements 14 oben und am Luftfilterelement 8 gesammelte Verunreinigungen können aufgrund der Erschütterungen beim Betrieb des ATV unter der Wirkung der Schwerkraft vom Luftfilterelement 8 herunter fallen, so dass auf diese Weise eine gewisse Selbstreinigungswirkung erreicht wird.

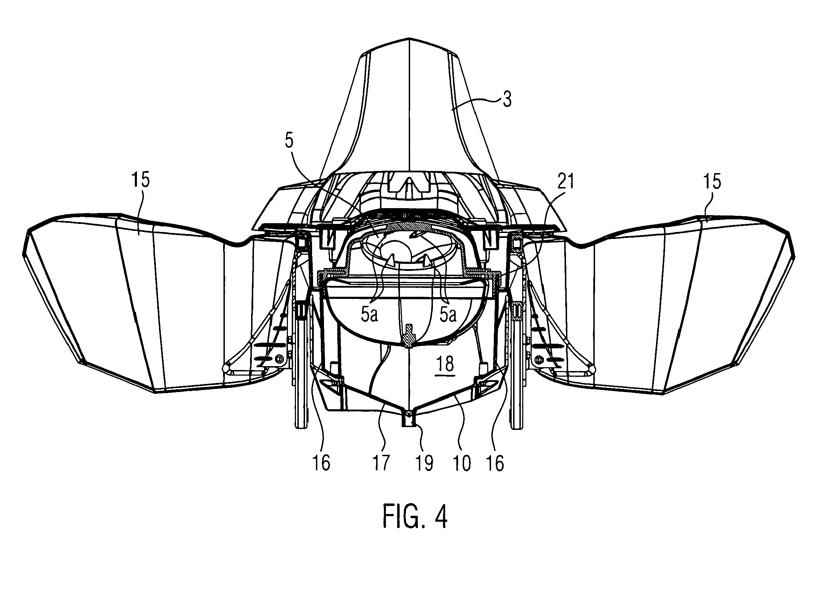

Anhand von Fig. 3 und Fig. 4 der Zeichnung ist ersichtlich, dass das Gehäuse 10 einstückig mit sich beidseits seitlich vom Gehäuse 10 wegerstreckenden Kotflügeln 15 ausgebildet ist, und somit von nicht näher dargestellten Rädern des Fahrzeugs, die sich unterhalb der Kotflügel 15 angeordnet befinden, aufgewirbelte Verunreinigungen und/oder Wasser und dergleichen nicht durch einen zwischen den Kotflügeln 15 und dem Gehäuse 10 gebildeten Spalt, wie dies bei bekannten Luftansaugvorrichtungen der Fall ist, in das Gehäuse 10 gelangen kann.

Fig. 4 der Zeichnung zeigt, dass das Gehäuse 10 Seitenwände 16 besitzt, die einstückig ausgebildet sind mit einem Gehäuseboden 17, der in der dargestellten Ausführungsform in einem Schnitt quer zur Längsrichtung des Gehäuses 10 eine einem invertierten Satteldach ähnliche Konfiguration besitzt.

Diese Ausbildung sorgt dafür, dass in einen Innenraum 18 des Gehäuses 10 gelangende Verunreinigungen an dem Gehäuseboden 17 in Richtung einer an einer tiefsten Stelle des Gehäusebodens 17 angeordneten Ablaufbohrung 19 gelangen und dort aus dem Innenraum 18 des Gehäuses 10 ausgetragen werden können.

Fig. 5 der Zeichnung zeigt eine Ausführungsform der erfindungsgemäßen Luftansaugvorrichtung 1 in einer perspektivischen Explosionsdarstellung. Der Kanal 5 ist einstückig mit dem kuppeldachförmig ausgebildeten Element 9 ausgebildet, welches über aufgrund der perspektivischen Darstellung nicht ersichtliche Rastnasen mit Rastausnehmungen 20 des Deckels 12 verrastet werden kann.

Der Deckel 12 weist eine sich nach unten gerichtet erstreckende Umlaufkante 21 auf, die bei der Anordnung des Deckels 12 an den Seitenwänden 16 des Gehäuses 10 die Seitenwände 16 übergreift. Das kuppeldachförmig ausgebildete Luftfilterelement 8 besitzt an einer der Anordnung an dem Deckel 12 zugewandten Fläche einen Dichtrand 14, der bei der am Deckel 12 angeordneten Stellung des Filterelements 8 dafür sorgt, dass das Filterelement 8 am Deckel 12 in dichtender Anordnung festgelegt werden kann. Zu diesem Zweck kann das aus einem Schaumstoffwerkstoff gefertigte Filterelement 8 über einen Haltekörper 23 gezogen werden, der dem Filterelement 8 die erforderliche Formstabilität zur Verfügung stellt.

Wird das Filterelement 8 an dem Deckel 12 angeordnet, so kann es über die beiden Endseiten 24, 25 des Federbügels 13 am Deckel 12 festgelegt werden. Zu diesem Zweck greift ein an dem Federbügel 13 angeordneter Haltebolzen 26 in eine Ausnehmung einer Buchse 27 des Haltekörpers 23 ein und sorgt auf diese Weise aufgrund seiner Federvorspannung dafür, dass der Dichtrand 14 sicher an der Unterseite des Deckels 12 anliegt.

Die erfindungsgemäße Luftansaugvorrichtung sorgt nun dafür, dass das Filterelement rasch und einfach ohne Zuhilfenahme von Werkzeug zugänglich gemacht und abgenommen und beispielsweise gereinigt werden kann. Zu diesem Zweck muss ein Benutzer des damit ausgestatteten Fahrzeugs, bei dem es sich beispielsweise um ATV handeln kann, nur den am Fahrzeug vorgesehenen Fahrersattel abnehmen oder in Richtung nach oben verschwenken, so dass die Luftansaugvorrichtung unterhalb des Fahrersattels frei zugänglich ist. Durch den elastisch ausgebildeten Kanal der Luftansaugvorrichtung kann das Luftfilterelement aus dem Gehäuse herausverschwenkt werden und verbleibt dabei an der Luftansaugvorrichtung. Die einstückige Konfiguration des Gehäuses der erfindungsgemäßen Luftansaugvorrichtung mit den Kotflügeln sorgt dafür, dass die Beladung der über den Ansaugluftstutzen in das Gehäuse strömenden Umgebungsluft mit Verunreinigungen in der Form von Staub, Sand, Wasser oder dergleichen deutlich verringert wird verglichen mit bekannten Luftansaugvorrichtungen.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Luftansaugvorrichtung
- 2: Rahmenstruktur
- 3: Fahrersattel
- 3a: Vorsprung
- 4: Einrichtung
- 5: Kanal
- 5a: Versteifungsrippe
- 6: Endbereich
- 7: Anschlussstutzen
- 8: Luftfilterelement
- 9: Element
- 10: Gehäuse
- 11: Ansaugluftstutzen
- 12: Abschnitt, Deckel
- 13: Federbügel
- 14: Dichtrand
- 15: Kotflügel
- 16: Seitenwand
- 17: Gehäuseboden
- 18: Innenraum
- 19: Ablaufbohrung
- 20: Rastausnehmung
- 21: Umlaufkante
- 22: Fläche
- 23: Haltekörper

- 24: Endseite
- 25: Endseite
- 26: Haltebolzen
- 27: Buchse
- 28: Halteelement
- 29: Hülse
- B: Pfeil

## Patentansprüche

1. Luftansaugvorrichtung für ein mit einer Brennkraftmaschine ausgestattetes Fahrzeug, mit einer gereinigte Ansaugluft für die Verbrennung in Richtung zur Brennkraftmaschine führenden Einrichtung (4) und einem an der Einrichtung (4) angeordneten Luftfilterelement (8) sowie einem das Luftfilterelement (8) aufnehmenden Gehäuse (10), **dadurch gekennzeichnet, dass** die Einrichtung (4) derart ausgebildet ist, dass das Luftfilterelement (1) aus dem Gehäuse (10) heraus verschwenkbar ist und dabei an der Einrichtung (4) angeordnet verbleibt.

2. Luftansaugvorrichtung nach Anspruch 1, **dadurch gekennzeichnet, dass** die Einrichtung (4) einen Abschnitt (12) besitzt, an dem das Luftfilterelement (8) lösbar festlegbar ist und der Abschnitt (12) an dem Gehäuse (10) festlegbar ist und dabei einen Deckel (12) des Gehäuses (10) bildet.

3. Luftansaugvorrichtung nach Anspruch 2, **dadurch gekennzeichnet, dass** die Einrichtung (4) einen die Ansaugluft führenden Kanal (5) mit einem im Querschnitt geschlossenen Profil besitzt, der mit einem zum Abschnitt (12) hin offenen gewölbten Element (9) einstückig ausgebildet ist, das an dem Abschnitt (12) festlegbar ist und der Kanal (5) an dem dem Element (9) gegenüberliegenden Endbereich (6) zur Anordnung an einem Drosselklappenkörper oder einem Vergaserkörper der Brennkraftmaschine ausgebildet ist.

4. Luftansaugvorrichtung nach einem der vorstehenden Ansprüche, **dadurch gekennzeichnet, dass** die Einrichtung (4) im Bereich eines die gereinigte Ansaugluft in Richtung zur Brennkraftmaschine führenden Kanals (5) elastisch ausgebildet ist und aus der Ebene eines Deckels (12) des Gehäuses (10) heraus verschwenkbar ist.

5. Luftansaugvorrichtung nach Anspruch 3 oder 4, **dadurch gekennzeichnet, dass** der Kanal (5) innerhalb seines geschlossenen Profils mit mindestens einer längsverlaufenden Versteifungsrippe (5a) versehen ist.

6. Luftansaugvorrichtung nach einem der vorstehenden Ansprüche, **dadurch gekennzeichnet, dass** das Luftfilterelement (8) ein kuppelförmig ausgebildetes Schaumstoffelement mit einem Dichtrand (14) ist und an einem mit einem Durchlass versehenen Haltekörper (23) angeordnet ist und mittels eines Federbügels (13) mit dem Dichtrand (14) gegen einen Abschnitt (12) der Einrichtung (4) in Anlage bringbar ist.

7. Luftansaugvorrichtung nach Anspruch 6, **dadurch gekennzeichnet, dass** das Schaumstoffelement mit dem Dichtrand (14) so gegen den Abschnitt (12) in Anlage bringbar ist, dass das Schaumstoffelement im Gehäuse (10) herabhängend angeordnet ist.

8. Luftansaugvorrichtung nach einem der vorstehenden Ansprüche, **dadurch gekennzeichnet, dass** das Gehäuse (10) einstückig mit sich in Längsrichtung des Gehäuses (10) davon beidseits seitlich weg erstreckenden Kotflügeln (15) ausgebildet ist, die zur Anordnung oberhalb von Rädern des Fahrzeugs vorgesehen sind.

9. Luftansaugvorrichtung nach einem der vorstehenden Ansprüche, **dadurch gekennzeichnet, dass** das Gehäuse (10) an einem in Längsrichtung des Gehäuses (10) einem Ansaugluft führenden Kanal (5) gegenüberliegenden Endbereich (6) einen Ansaugluftstutzen (11) zur Führung von Umgebungsluft in das Gehäuse (10) besitzt.

10. Luftansaugvorrichtung nach Anspruch 9, **dadurch gekennzeichnet, dass** der Ansaugluftstutzen (11) zur Anordnung im Bereich unterhalb eines Fahrersattel (3) des Fahrzeugs ausgebildet ist.

11. Luftansaugvorrichtung nach einem der vorstehenden Ansprüche, **dadurch gekennzeichnet, dass** das Gehäuse (10) Seitenwände (16) aufweist, die einstückig mit einem Gehäuseboden (17) ausgebildet sind, der in einem Schnitt quer zur Längsrichtung des Gehäuses (10) einem invertierten Satteldach ähnlich ausgebildet ist und an einer tiefsten Stelle eine Ablaufbohrung (19) besitzt.

12. Luftansaugvorrichtung nach einem der vorstehenden Ansprüche, **dadurch gekennzeichnet, dass** sie zur Anordnung unterhalb eines Fahrersattels (3) eines zweispurigen Fahrzeugs ausgebildet ist.

13. Luftansaugvorrichtung nach einem der vorstehenden Ansprüche, **dadurch gekennzeichnet, dass** die Einrichtung (4) zur Anordnung an einer Rahmenstruktur (2) des Fahrzeugs ausgebildet ist.

14. Luftansaugvorrichtung nach einem der vorstehenden Ansprüche, **dadurch gekennzeichnet, dass** das Fahrzeug ein All-Terrain-Vehicle (ATV) ist.
